# EUROPEAN PATENT SPECIFICATION

(11) **EP 3 384 788 B1**
(45) Date of publication and mention of the grant of the patent: **24.03.2021**
(21) Application number: 17165546.7
(22) Date of filing: 07.04.2017
(51) Int. Cl.: A24C 5/34, A24C 5/345, G01N 21/952

(54) **APPARATUS AND METHOD FOR REJECTION OF DEFECTIVE ROD-LIKE ARTICLES FROM A MASS FLOW OF ROD-LIKE ARTICLES OF THE TOBACCO INDUSTRY**
VORRICHTUNG UND VERFAHREN ZUR AUSSONDERUNG VON STABFÖRMIGEN ARTIKELN AUS EINEM MASSENSTROM VON STABFÖRMIGEN ARTIKELN DER TABAKINDUSTRIE
APPAREIL ET PROCÉDÉ POUR ELIMINER DES ARTICLES EN FORME DE TIGE DÉFECTUEUX À PARTIR D'UN FLUX MASSIQUE D'ARTICLES EN FORME DE TIGE DE L'INDUSTRIE DU TABAC

(43) Date of publication of application: 10.10.2018
(73) Proprietor: International Tobacco Machinery Poland Sp. z o.o., 26-600 Radom (PL)
(72) Inventor: OWCZAREK, Radoslaw, 26-600 Radom (PL)
(74) Representative: Markieta, Jaroslaw Franciszek

(56) References cited:
- GB-A- 2 228 176
- US-A- 4 376 484
- US-A- 4 976 544
- US-B1- 6 446 632

## Description

The object of the invention is apparatus and method for the rejection of defective rod-like articles from a mass flow of rod-like articles of the tobacco industry.

The devices for rejecting improperly filled cigarettes are known from the documents EP 0'853'045 A1 and GB 2'228'176 A. In both solutions the cigarettes are placed in a gravitational feeder and are fed one at a time before a filling sensor disposed on the tobacco side which checks the correctness of cigarette filling. Based on a signal from the sensor, a controller decides on the removal of a selected cigarette by a rejecting unit situated in the further part of the feeder. In the disclosed solutions, the selected cigarettes are removed by means of pneumatic devices. The cigarettes which have not been rejected are pushed out one by one at the end of the feeder, which ensures a stepwise nature of the cigarette flow in the gravitational feeder. GB 2 228 176 A discloses in figure 3 of D1 an apparatus that is arranged between the forming machine and the packaging machine and allows removal of defective rod-like articles without disturbing the mass flow, in line with the general objective of the present invention.

A method and an apparatus for removal of rod-like articles of the tobacco industry from mass flow are known from the document EP 2'399'465 A1. The apparatus uses a variable volume chamber. Before the removal of a rod-like article the chamber is enlarged to form an area in which a group of rod-like articles in the chamber leaves the mass flow. An individual, randomly selected rod-like article may be removed from such group by a robot arm.

A cigarette package coding system is known from the document EP 2'768'734 B1. A printing device imprints cigarette packages transported on a conveyor before the head of the printing device. Further on the conveyor there is situated an imprint correctness checking device, and behind it there is an apparatus rejecting selected cigarette packages. The selection of a cigarette package to be rejected is based on a signal from an apparatus checking the imprint correctness sent in the case of imprint error detection.

An apparatus for receiving and removal of individual rod-like articles from the mass flow is known from the document GB 2'241'865 A. The rod-like articles are randomly removed to check the quality. The apparatus consists of a semi-cylindrical element immersed in the mass flow and having a casing in the shape of a cradle. When the casing is retracted, the rod-like articles flow in the mass flow through the semi-cylindrical element. Pulling out the casing isolates a rod-like article in the apparatus and enables extracting it from the mass flow.

An apparatus for the rejection of defective cigarettes is known from the document US 4'693'374 A. The apparatus has the form of an intermediate store in the bottom part of which the cigarettes are arranged in columns. The movement of cigarettes in the columns is stepwise. Sensors checking the cigarette production quality are adapted to test one cigarette on both mouthpiece and filter sides. The rejection of a defective cigarette is effected by means of a special extraction needle which at the first step is inserted inside a defective cigarette, and at the next step extracts the defective cigarettes. The full defective cigarette extraction cycle is coupled with an element removing the cigarettes at the end of the column.

An apparatus checking the ends of cigarettes situated in trays and extracting defective cigarettes is known from the document US 4'976'544 A. The apparatus is provided with a camera recording an image of one side of a cigarette group in a tray. The apparatus comprises further a unit rejecting a selected cigarette from the tray. An object of the invention is an apparatus of the tobacco industry for rejection of defective rod-like articles from a mass flow of rod-like articles on a conveyor, comprising a monitoring unit adapted to optically determine geometrical parameters of rod-like articles and at least one rejecting unit adapted to remove a rod-like article from the mass flow of rod-like articles. The unit is configured for being placed downstream of the mass flow of the rod-like articles in the moving direction of the conveyor from the monitoring unit. The apparatus further comprises a controller and moreover the monitoring unit has optical recorders adapted to record images of opposite front surfaces of the mass flow of rod-like articles on a conveyor, The controller is adapted to identify defective rod-like articles in the mass flow, and determine the position of the defective rod-like articles in the mass flow, based on the recorded images, and with criteria concerning the geometrical parameters of the opposite front surfaces of rod-like articles. The controller is adapted moreover to generate control signals for a rejecting unit to move a pushing element to the position enabling to push out the defective rod-like article. The rejecting unit comprises at least one pushing element adapted to reject the defective rod-like article, the rejection unit is adapted to move along together with the mass flow in a position enabling it to push out the defective rod-like article and to move along together with the mass flow during the course of rejection in response to the controls signal as received from the controller.

The apparatus according to the invention is characterised in that the pushing element is adapted to move along together with the mass flow with the same speed as the rod-like articles in the mass flow.

The apparatus according to the invention is characterised in that the pushing element is adapted tomove along together with the mass flow with the measured speed as the rod-like articles in the mass flow, whereas the speed of the rod-like articles in the mass flow is constant and/or variable.

The apparatus according to the invention is characterised in that the rejecting unit further comprises at least one restraining element, disposed on the opposite side of the mass flow relative to the pushing element, the restraining element being adapted to reject any defective rod-like article and to restrain the rod-like articles situated around the defective rod-like article to be rejected.

The apparatus according to the invention is characterised in that the monitoring unit is adapted to optically determine the geometrical parameters of the front surfaces of the rod-like articles, in particular the symmetricity, the regularity of shape of the front surface of a rod-like article, the continuity of the wrapper, the wrappings of the wrapper, and the symmetricity of insert elements visible from the front side of the article.

The apparatus according to the invention is characterised in that the monitoring unit comprises at least two cameras situated on the opposite sides of the mass flow of rod-like articles.

The apparatus according to the invention is characterised by comprising two rejecting units situated on the opposite sides of the mass flow.

The apparatus according to the invention is characterised in that rejecting unit comprises at least two pushing elements situated on the opposite sides of the mass flow or on the same side of the mass flow. An object of the invention is also a method of rejection of defective rod-like articles from the mass flow of rod-like articles on the conveyor, comprising the following steps: recording images of opposite front surfaces of the mass flow of rod-like articles by means of a monitoring unit in the form of optical recorders and identifying in the mass-flow defective rod-like articles and determining the position of defective rod-like articles in the mass flow on the conveyor by means of a controller, wherein identifying defective rod-like articles is based on the image of the front surfaces of the mass flow and the criteria relating to geometrical parameters of the opposite front surfaces of rod-like articles. Method also includes steps of generating control signals for rejecting unit to move the pushing element to a position enabling to push out the defective rod-like article by means of the controller, receiving signals from the controller by a rejection unit and rejecting the defective rod-like article by at least one pushing element being part of the rejecting unit. The rejection takes place after moving along together with the mass flow in a position enabling it to push out the defective rod-like article and moving along together with the mass flow during the course of rejection in response to the controls signal as received from the controller.

The object of the invention is also a system for determining the quality in the tobacco industry comprising a first apparatus for the rejection of defective rod-like articles from the mass flow of rod-like articles on a conveyor, according to the invention at least one intermediate rod-like articles handling apparatus and/or a rod-handling transport apparatus and a second monitoring apparatus comprising second monitoring unit having second optical recorders recording images of opposite front surfaces of the mass flow of rod-like articles on the conveyor at a location downstream of the at least one intermediate rod-like articles handling apparatus and/or a rod-handling transport apparatus, and a second controller adapted to identify defective rod-like articles in the mass flow, basing on the recorded images, using criteria concerning geometrical parameters of the opposite front surfaces of rod-like articles.

The system according to the invention is characterised in that the second controller of the second monitoring apparatus further is adapted to determine the position of the defective rod-like articles in the mass flow on the conveyor, and the system is further provided with a second rejecting unit comprising a second pushing element and a second restraining element adapted to reject the defective rod-like article, mounted in such a way that during the course of rejection they move along together with the mass flow.

The system according to the invention is characterised in that the rod-like articles handling apparatus or the rod-handling transport apparatus are selected from a group comprising a loader, a tray, an unloader, a band conveyor, and a buffer store.

The main advantage of the apparatus for rejection of defective rod-like articles according to the invention is the elimination of rod-like articles directly from the mass flow without disturbing the mass flow. The apparatus according to the invention may be placed in existing systems using the mass flow of rod-like articles not only to increase the production quality, but also to test the influence of devices in the production line on the production quality.

The object of the invention was shown in detail in a preferred embodiment in a drawing in which:
- Fig. 1: shows an apparatus according to the invention in a first embodiment;
- Fig. 2: shows the apparatus according to the invention in the first embodiment when a rejecting unit has moved to a position at which it may begin pushing out a defective rod-like article;
- Fig. 3: shows the apparatus according to the invention in the first embodiment when the rejecting unit has moved to a position at which pushing out of the defective rod-like article has ended;
- Fig. 4: shows the apparatus according to the invention in a second embodiment;
- Fig. 5: shows the apparatus according to the invention in a third embodiment;
- Fig. 6: shows the rejecting unit of the apparatus according to the invention in a top view;
- Fig. 7: shows a method for determining the position of a defective rod-like article in the mass flow;
- Fig. 8: shows a block diagram of a system according to the invention in a preferred embodiment;
- Fig. 9 and 10: show a side view of the mass flow containing defective rod-like articles, presenting various defects of the rod-like articles.

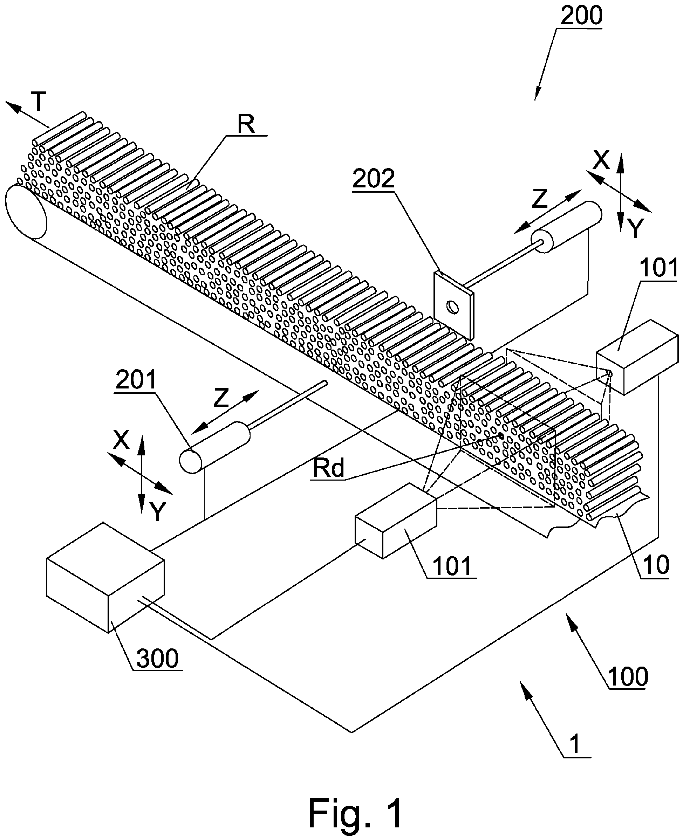

Fig. 1 shows an apparatus 1 for rejection of defective rod-like articles comprising a monitoring unit 100 and a rejecting unit 200 situated together around a mass flow of rod-like articles R. The mass flow of rod-like articles R is effected on a conveyor 10 in the direction T.

The monitoring unit 100 comprises optical recorders 101 situated on two sides of the mass flow of rod-like articles R. The optical recorders 101 may be video cameras, photographic cameras or other devices able to record an image representing the front surfaces of the mass flow of rod-like articles R. The monitoring unit 100 has a controller which is adapted to optically determine geometrical parameters of rod-like articles R, in particular to determine the geometrical parameters of the front surface of rod-like articles R forming the mass flow on the conveyor 10.

The rejecting unit 200 comprises a pushing element 201 and a restraining element 202. Both the pushing element 201 and the restraining element 202 are moved by means of actuators, whereas the actuator moving the pushing element is adapted to make a travel being greater than the length of the rod-like articles R so that the rod-like article to be pushed out leaves the mass flow of rod-like articles. The restraining element 202 makes movements in the axis of the rod-like articles with a relatively small travel. The function of the restraining element 202 is to restrain the rod-like articles situated directly around the rod-like article to be pushed out. Due to the friction among individual articles R in the mass flow, pushing out a defective article Rd may cause slipping out of the rod-like articles R having correct parameters. This is why the restraining element 202 has been applied.

The pushing element 201 preferably has the form of a rod having a diameter smaller than or equal to the diameter of the rod-like article, or the form of a rod provided with a pushing tip with a corresponding diameter smaller than or equal to the diameter of the rod-like article R. The restraining element preferably has the form of a plate having a hole with a diameter greater than the diameter of the rod-like article R. Optionally, the restraining element may have the form of a ring or a set of restraining rods which make it impossible for the rod-like articles R adjacent to a defective rod-like article Rd to slip out.

A significant feature of the rejecting unit 200 is that it is mounted in such a way that it moves along together with the mass flow of rod-like articles R. Due to the movable mounting of the rejecting unit 200, the process of pushing out defective rod-like articles Rd from the mass flow is effected without the need of dedicated stopping of the mass flow. In a situation where the mass flow stops, the rejecting unit also stops and may carry out the procedure of pushing out a defective rod-like article Rd from the stopped mass flow. Optionally, the mass flow of rod-like articles R may be stopped at the time of performance of the operation of pushing out a defective rod-like article Rd.

Fig. 1 also shows a controller 300 constituting an integral part of the apparatus 1. Its function is to identify a defective rod-like article Rd basing on received data from the monitoring unit 100, and to determine its exact position in order to enable the rejecting unit 200 to push out a proper rod-like article Rd from the mass flow of rod-like articles R. The controller 300, basing on the recorded images using the criteria concerning geometrical parameters of the opposite front surfaces of rod-like articles (R), identifies defective rod-like articles (Rd) in the mass flow, and determines the position of defective rod-like articles (Rd) in the mass flow. The positioning of the recorders 101 on both sides of the mass flow of rod-like articles R enables detecting articles whose defects occur on a single front surface. Using the recording of two images it is also possible to eliminate errors in location of defective rod-like articles caused by skewed rod-like articles in the mass flow.

In the embodiment shown, the image of each side of the mass flow of rod-like articles R is recorded by means of at least one camera 101. It is also possible to use two cameras on each side of the mass flow. Two cameras may be arranged at a different angle to the source of light. Such solution enables recording both reflected and scattered light. Two cameras may be also cameras of different type. The use of a colour camera allows obtaining more detailed information concerning the shape and colour of the rod-like articles, while the monochromatic cameras are considerably faster and enable more accurate tracking of changes during the flow of the rod-like articles.

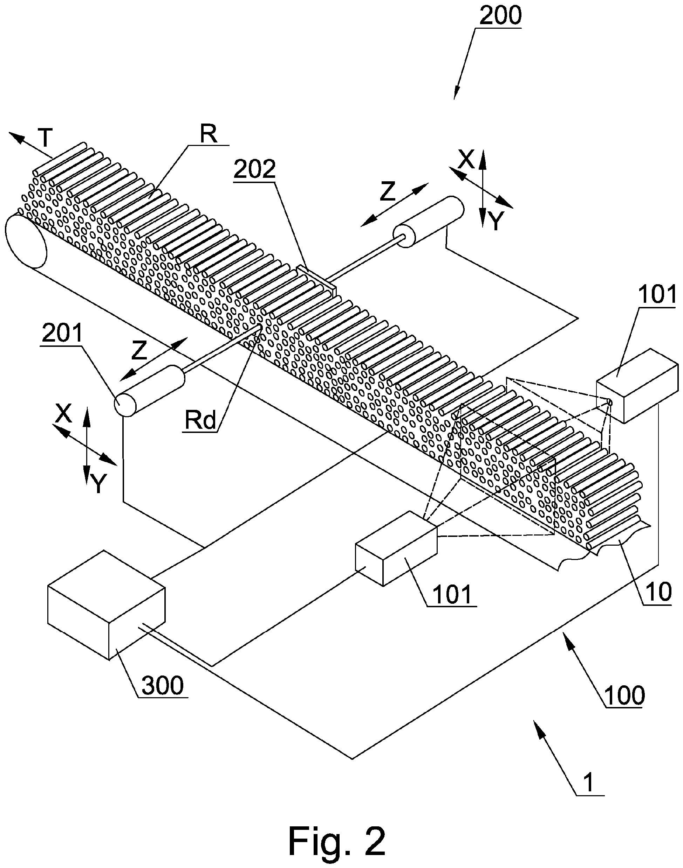

Fig. 2 shows the apparatus 1 during the operation. The monitoring unit has identified a defective rod-like article Rd in the mass flow of rod-like articles R on the conveyor 10. The controller 300, basing on the data from the monitoring unit 100, has determined the position of the defective rod-like article Rd in the mass flow and has sent control signals to the rejecting unit which has moved the pushing element 201 and the restraining element 202 to a position enabling them to push out the defective rod-like article Rd from the mass flow R. In the embodiment shown, the rejecting unit 200 moves along together with the mass flow of rod-like articles R in the direction T. The movement of the rejecting unit 200 is adjusted to the speed of the mass flow so that during the operation of pushing out a defective rod-like article Rd the pushing element 201, the restraining element 202, and the defective rod-like article Rd do not move relative to one another in the xy-plane. The constant reciprocal position between the rejecting unit and the defective rod-like article in the mass flow is maintained in the follow-up mode regardless of whether the mass flow moves with a constant speed or whether its speed varies or the mass flow is stopped.

Furthermore, the pushing element 201 and the restraining element 202 may independently make movements in the perpendicular direction to the front surfaces of rod-like articles R in the mass flow. The independent movement of the restraining element 202 towards the axis Z is effected before pushing out the defective rod-like article, until a position is reached in which the front surfaces of rod-like articles R situated around the defective rod-like article Rd to be rejected are pressed by the restraining element 202. Such position of the restraining element 202 is maintained relative to the rod-like articles R until the moment of pushing out the defective rod-like article Rd from the mass flow. The independent movement of the pushing element 201 is effected when the defective rod-like article Rd is being pushed out and consists in pushing the restraining element 202 of the defective rod-like article Rd through the rejection hole. The function of the pushing element is to push out an individual rod-like article from the mass flow.

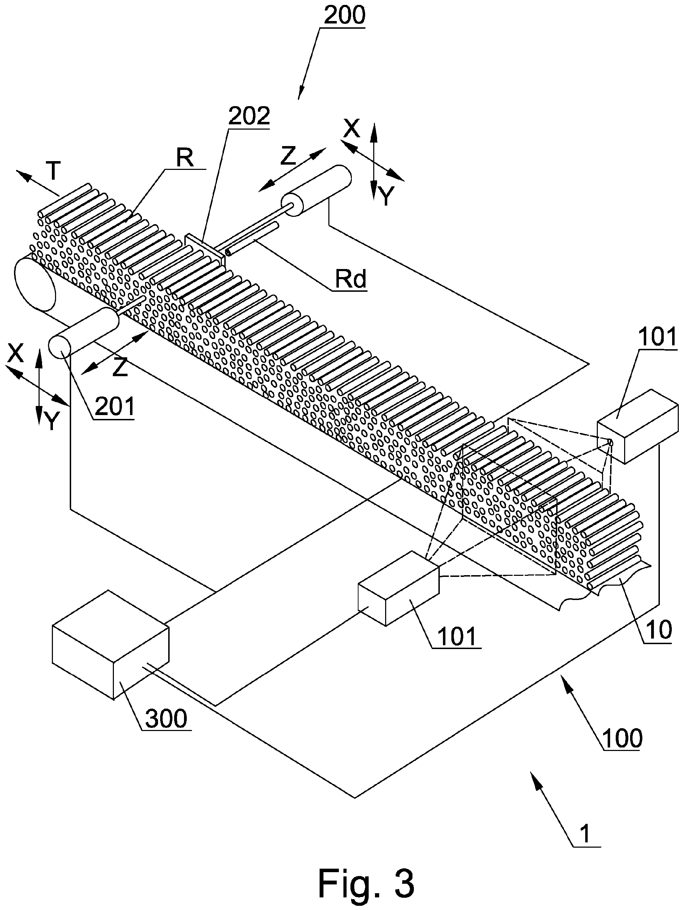

Fig. 3 shows the apparatus 1 according to the invention when the rejecting unit 200 has rejected a defective rod-like article Rd. The pushing element 201 of the rejecting unit 200 has pushed out the defective rod-like article Rd in the direction Z, outside the mass flow, whereas the restraining element 202 during pushing out of the defective rod-like article Rd restrains the rod-like articles adjacent to the defective rod-like article Rd. Having pushed out the defective rod-like article Rd, the restraining element 202 returns to its initial position or may move to a point at which another defective rod-like article to be rejected is positioned.

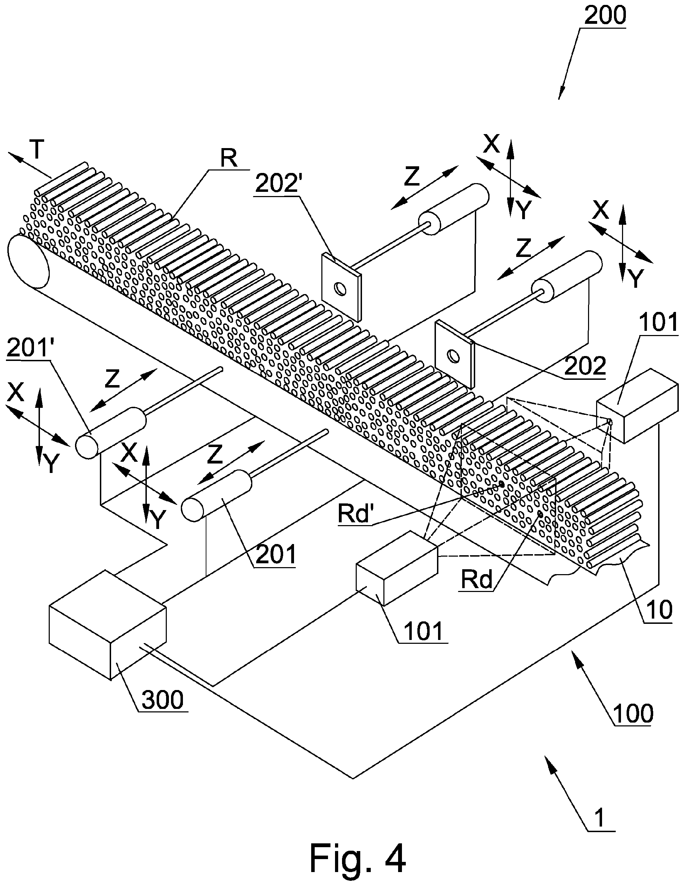

Fig. 4 shows a second embodiment of the apparatus 1 according to the invention wherein the rejecting unit 200 in a double configuration was used. The rejecting unit 200 according to the second embodiment is provided with a first rejecting element 201 and a second rejecting element 201', and with a first restraining element 202 and a second restraining element 202'. In this embodiment of the invention, the controller 300 by identifying the position of the defective rod-like articles Rd and Rd' controls the rejecting unit 200 so that the first rejecting element 201 rejects the first defective rod-like article Rd, and the second rejecting element 201' rejects the second defective rod-like article Rd'. The controller 300 is adapted to optimise the sequence of rejection of defective rod-like articles by minimising the time needed to remove all defective rod-like articles Rd, Rd' from the mass flow of rod-like articles R.

It is possible to apply other optimisation techniques, for example techniques taking into consideration not only the time needed to remove all the defective rod-like articles Rd, Rd', but also the degree of damage, the number of defective rod-like articles, their position and distance relative to one another. Preferably the sequence of rejection of rod-like articles from the mass flow is determined on the basis of the smallest influence on the position of the next defective rod-like article in the mass flow of rod-like articles, in particular the defective rod-like articles are rejected beginning from the uppermost layer.

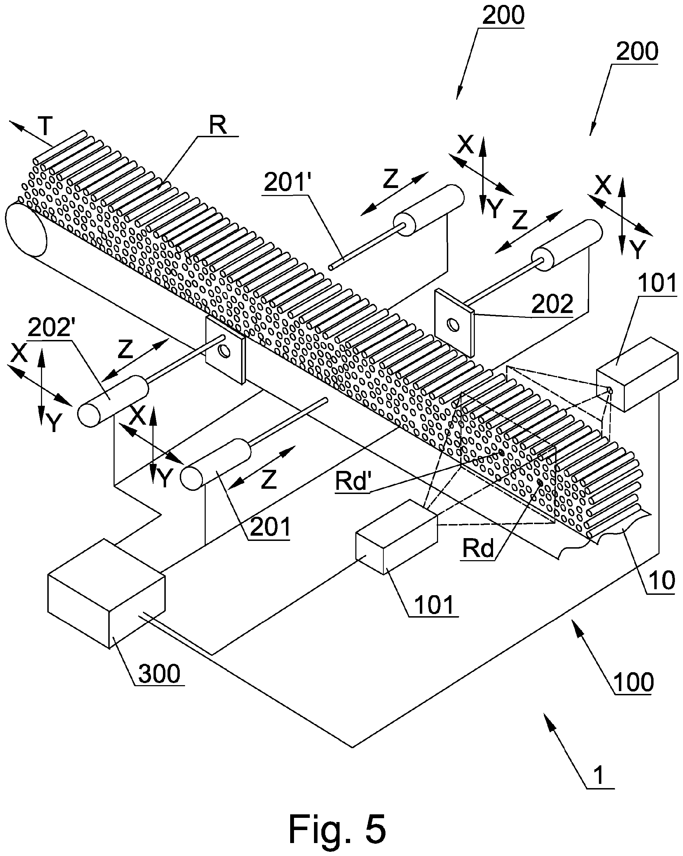

Fig. 5 shows another embodiment of the apparatus 1 according to the invention. In this embodiment, the rejecting unit 200 has a double configuration similar to the configuration of the embodiment shown in Fig. 4, modified in such a way that the rejection of defective rod-like articles Rd, Rd' is possible on both sides of the mass flow. In this embodiment, the restraining element 202' is situated on the same side of the mass flow of rod-like articles R as the pushing element 201. Similarly, the pushing element 201' is situated on the same side of the mass flow of rod-like articles R as the restraining element 202.

Double configurations of the rejecting unit are used when the number of defective rod-like articles Rd in the mass flow of rod-like articles is considerable or the speed of movement of the mass flow is high, i.e. in any situation where due to mechanical limitations the use of a single rejecting unit does not ensure a sufficient efficiency.

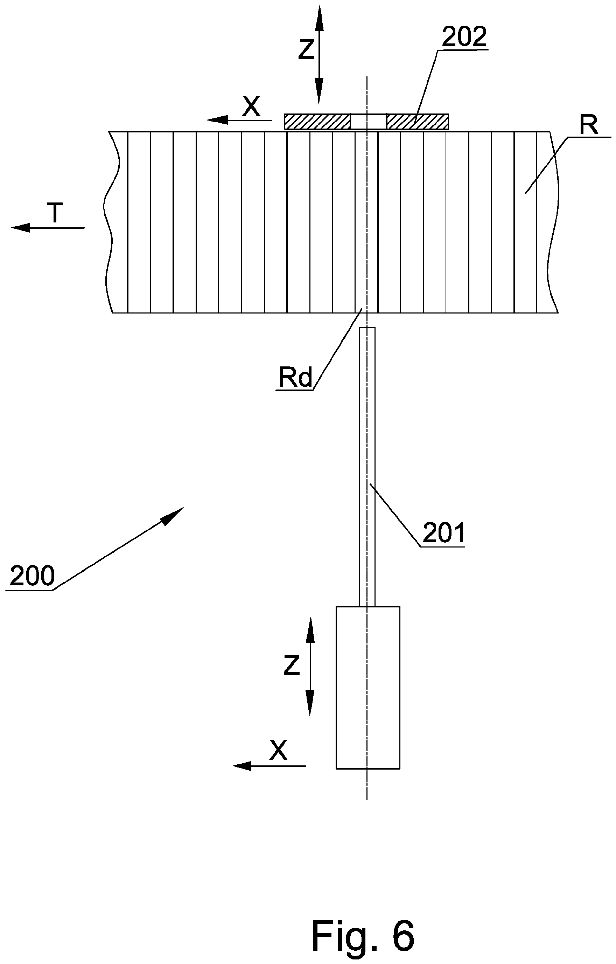

Fig. 6 shows the rejecting unit 200 of the apparatus 1 according to the invention in a top view. The restraining element 202 is shown in a cross-section taken at a level corresponding to the centre of the rejection hole.

The pushing element 201 and the restraining element 202 are positioned in one axis with the defective rod-like article Rd. The positioning in one axis is to be understood in such a way that the axis of the element 201 and the centre of the rejection hole of the element 202 overlap the axis of the defective rod-like article Rd.

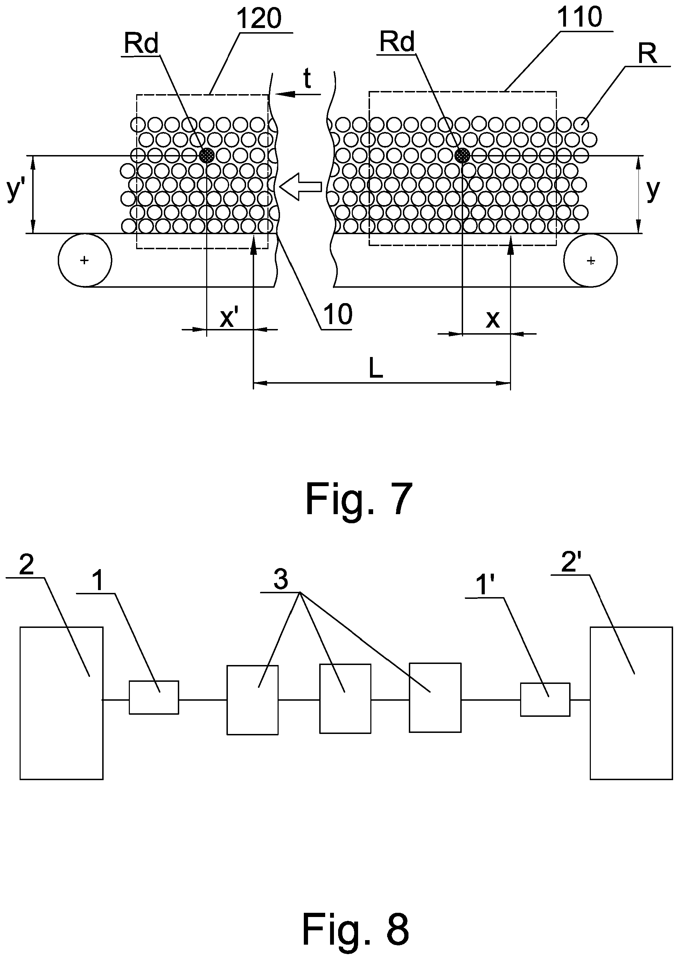

Fig. 7 shows a diagrammatic side view of the mass flow of rod-like articles R with marked position of the defective rod-like article Rd. The coordinates x and y in the local coordinate system related to the monitoring unit 100 are determined based on the image 110 of the side surface of the mass flow, comprising the view of the front surfaces of rod-like articles R among which the defective rod-like article Rd is situated. The system of local coordinates x', y' related to the rejecting unit 200 is situated at the distance L from the local coordinate system related to the monitoring unit 100. Preferably the mass flow between the monitoring unit 100 and the rejecting unit 200 moves along with a constant speed, horizontally, therefore the information about the distance between the systems and the speed of movement of the mass flow is sufficient to connect local coordinate systems and determine the position of the defective rod-like article Rd in the local coordinate system of the rejecting unit x', y'. However, also such positioning of the rejecting unit relative to the monitoring unit is possible where in order to determine the position of the defective rod-like article Rd in the local coordinate system the translation by a vector L comprising all components in all axes of the global coordinate system and the function of change of speed of the mass flow in time and space will be required.

In the preferred embodiment, the position of a defective product on the conveyor may be defined by the position y and the position x in the local coordinate system, whereas the local coordinate system is preferably positioned in such a way that its axis y overlays the front surface of rod-like articles R situated on the conveyor 10 so that the position y is the distance from the longitudinal axis of the defective article to the base of the mass flow formed by the band of the conveyor 10. Since in the preferred embodiment the mass flow of rod-like articles R is effected on the horizontal band conveyor 10, the position y does not change during the transport from the area of the monitoring unit 110 to the area of the rejecting unit 120. The position x is determined in relation to the origin of the local coordinate system being an arbitrarily selected point in the area of the monitoring unit 110. The local coordinate system related to the rejecting unit is determined in the space in a similar way. Having such a definition of local coordinate systems, the information about the distance between the origins of local coordinate systems is sufficient to determine the position of the defective rod-like article. In the preferred embodiment of the apparatus 1 wherein the defective rod-like article Rd is being pushed out during the movement of the mass flow, the distance L between the local coordinate systems changes with the movement of the rejecting unit.

The speed of movement of the mass flow may be determined by means of a separate speed sensor (not shown) or based on the data coming from the images collected by the monitoring unit 100.

Fig. 8 shows a system for determining the quality of rod-like articles in the tobacco industry comprising the first apparatus 1 according to the invention for the rejection of defective rod-like articles from the mass flow of rod-like articles, and at least one intermediate apparatus 3, in particular a transport chain apparatus.

The system is further provided with the second apparatus 1' which is provided either only with the monitoring unit 100 or also with the rejecting unit 200 like the first apparatus 1. So preferably, in the system there are two apparatuses 1 according to the invention determining the quality of rod-like articles at the beginning of the transport chain and at the end of the transport chain or transport chain fragment.

The apparatus 1' may constitute a truncated version of the apparatus 1 wherein the monitoring apparatus comprises the monitoring unit 100 and has optical recorders 101 recording the images of opposite front surfaces of the mass flow of rod-like articles R on the conveyor, and the controller 300 which basing on the recorded images, using the criteria concerning geometrical parameters of the opposite front surfaces of the rod-like articles, identifies defective rod-like articles in the mass flow. The second apparatus 1' may be further provided with the rejecting unit 200.

The comparison of the number of defective rod-like articles in the mass flow at two points of the transport chain allows determining the influence of apparatuses situated between the apparatuses 1 and 1' on the quality of the rod-like articles. The intermediate apparatuses whose influence on the quality of the rod-like articles may be determined include for example a loader, a tray, an unloader, a band conveyor, and a buffer store.

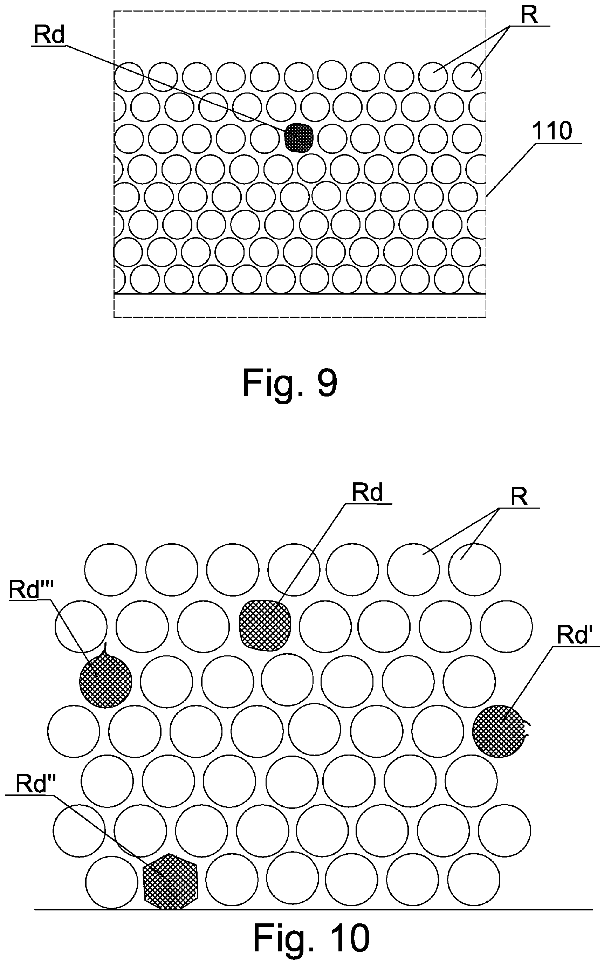

Figs. 9 and 10 show an example fragment of the mass flow of rod-like articles in the area of the monitoring unit 110 recorded by one of the optical recorders. The shown example fragment comprises a group of rod-like articles R among which a defective rod-like article Rd is situated. Fig. 10 shows examples of defects of the rod-like articles which may be detected in the apparatus according to the invention, these include circumferential deformations Rd, tears Rd', squashing's Rd", burrs Rd"' and the like, being visible on any of the front surfaces of the rod-like article, in particular the symmetricity, the regularity of shape of the front surface of a rod-like article, the continuity of the wrapper, the wrappings of the wrapper, and the symmetricity of insert elements visible from the front side of the article.

An advantage of the method, the apparatus and the system according to the invention is that they may be installed in existing transport systems, they do not affect the mass flow and the process of transport of the rod-like articles, in addition, all the rod-like articles flowing in the mass flow are analysed, enable detecting defects occurring on both sides or on one side regardless of the side on which such defects occurs.

## Claims

1. An apparatus of the tobacco industry for rejection of defective rod-like articles (Rd) from a mass flow of rod-like articles (R) on a conveyor, comprising
a monitoring unit (100) adapted to optically determine geometrical parameters of rod-like articles (R), and
at least one rejecting unit (200) adapted to remove a defective rod-like article (Rd) from the mass flow of rod-like articles (R), the unit configured for being placed downstream of the mass flow of the rod-like articles (R) in the moving direction of the conveyor from the monitoring unit (100),
a controller (300), wherein
the monitoring unit (100) has optical recorders (101) adapted to record images of opposite front surfaces of the mass flow of rod-like articles (R) on a conveyor, moreover
**wherein**
the controller (300) is adapted to identify defective rod-like articles (Rd) in the mass flow, and determine the position of the defective rod-like articles (Rd) in the mass flow, based on the recorded images, and with criteria concerning the geometrical parameters of the opposite front surfaces of rod-like articles (R), and adapted to generate control signals for a rejecting unit (200) to move a pushing element (201) to the position enabling to push out the defective rod-like article (Rd), and
the rejecting unit (200) comprises at least one pushing element (201) adapted to reject the defective rod-like article (Rd), the rejection unit is adapted to move along together with the mass flow into a position enabling it to push out the defective rod-like article (Rd) and to move along together with the mass flow during the course of rejection in response to the controls signal as received from the controller (300).

2. The apparatus as in claim 1 wherein that the pushing element (201) is adapted to move along together with the mass flow with the measured speed of the rod-like articles (R) in the mass flow.

3. The apparatus as in claim 2 wherein the pushing element (201) is adapted to move along together with the mass flow with the measured speed as the rod-like articles (R) in the mass flow, whereas the measured speed of the rod-like articles (R) in the mass flow is constant and/or variable.

4. The apparatus as in any of the claims 1 to 3 wherein that the rejecting unit (200) further comprises at least one restraining element (202), disposed on the opposite side of the mass flow relative to the pushing element (201), the restraining element (202) being adapted to reject the defective rod-like article (Rd) and to restrain the rod-like articles (R) situated around the defective rod-like article (Rd) to be rejected.

5. The apparatus as in any of the claims 1 to 4 wherein the monitoring unit (100) is adapted to optically determine the geometrical parameters of the front surfaces of the rod-like articles (R), in particular symmetricity, regularity of shape of the front surface of a rod-like article (R), continuity of the wrapper, wrappings of the wrapper, and symmetricity of insert elements visible from the front side of the article.

6. The apparatus as in any of the claims 1 to 5 wherein that the monitoring unit (100) comprises at least two cameras situated on opposite sides of the mass flow of rod-like articles (R).

7. The apparatus as in any of the claims 1 to 6 wherein the apparatus comprises two rejecting units (200) situated on the opposite sides of the mass flow.

8. The apparatus as in any of the claims 1 to 7 wherein the rejecting unit (200) comprises at least two pushing elements (201) situated on the opposite sides of the mass flow or on the same side of the mass flow.

9. A method of rejection of defective rod-like articles (Rd) from a mass flow of rod-like articles (R) on a conveyor comprising the following steps:
recording images of opposite front surfaces of the mass flow of rod-like articles by means of a monitoring unit (100) in the form of optical recorders (101),
identifying in the mass-flow defective rod-like articles (Rd) and determining the position of defective rod-like articles (Rd) in the mass flow on the conveyor by means of a controller (300), wherein identifying defective rod-like articles (Rd) is based on the image of the front surfaces of the mass flow and the criteria relating to geometrical parameters of the opposite front surfaces of rod-like articles,
in the controller (300), generating control signals for rejecting unit (200) to move the pushing element (201) to a position enabling to push out the defective rod-like article (Rd),
receiving signals from the controller (300) by a rejection unit (200),
rejecting the defective rod-like article (Rd) by at least one pushing element (201) being part of the rejecting unit (200) after moving along together with the mass flow in a position enabling it to push out the defective rod-like article (Rd) and moving along together with the mass flow during the course of rejection in response to the controls signal as received from the controller (300).

10. A system for determining quality in the tobacco industry comprising
a first apparatus for the rejection of defective rod-like articles (Rd) from mass flow of rod-like articles (R) on a conveyor, as in claim 1,
at least one intermediate rod-like articles handling apparatus and/or a rod-handling transport apparatus (3), and
a second monitoring apparatus (1') comprising a second monitoring unit (100) having second optical recorders (101) recording images of the opposite front surfaces of the mass flow of rod-like articles (R) on the conveyor at a location downstream of the at least one intermediate rod-like articles handling apparatus and/or a rod-handling transport apparatus (3), and a second controller (300) adapted to identify defective rod-like articles (Rd) in the mass flow, basing on the recorded images, using criteria concerning geometrical parameters of the opposite front surfaces of rod-like articles (R).

11. The system as in claim 10 wherein
the second controller (300) of the second monitoring apparatus (1') further is adapted to determine the position of the defective rod-like articles (Rd) in the mass flow on the conveyor, and the system is further provided with
a second rejecting unit (200) comprising a second pushing element (201) and a second restraining element (202) is adapted to reject the defective rod-like article (Rd), and further adapted to move along together with the mass flow during the course of rejection.

12. The system as in any of the claims 10 to 11 wherein the rod-like articles handling apparatus or the rod-handling transport apparatus (3) are selected from a group comprising a loader, a tray, an unloader, a band conveyor, and a buffer store.

## Patentansprüche

1. Die Vorrichtung der Tabakindustrie zum Zurückweisen von defekten stabförmigen Gegenständen (Rd) aus einem Massenstrom von stabförmigen Gegenständen (R) auf einem Förderer, umfassend
eine Überwachungseinheit (100), die angepasst ist, um geometrische Parameter von stabförmigen Gegenständen (R) optisch zu bestimmen, und
mindestens eine Zurückweisungseinheit (200), die geeignet ist, einen defekten stabförmigen Gegenstand (Rd) aus dem Massenstrom von stabförmigen Gegenständen (R) zu entfernen, wobei die Einheit so konfiguriert ist, dass sie stromabwärts des Massenstroms der stabförmigen Gegenstände (R) in Bewegungsrichtung des Förderers von der Überwachungseinheit (100) angeordnet ist,
eine Steuerung (300), worin
die Überwachungseinheit (100) optische Rekorder (101) hat, die dazu ausgelegt sind, Bilder von gegenüberliegenden Vorderflächen des Massenstroms von stabförmigen Gegenständen (R) auf einem Förderer aufzuzeichnen,
wobei
die Steuerung (300) ist angepasst, um defekte stabförmige Gegenstände (Rd) im Massenstrom zu identifizieren und die Position der defekten stabförmigen Gegenstände (Rd) im Massenstrom zu bestimmen, basierend auf den aufgezeichneten Bildern und mit Kriterien bezüglich der geometrischen Parameter der gegenüberliegenden Vorderflächen von stabförmigen Gegenständen (R), und ist angepasst, um Steuersignale für eine Zurückweisungseinheit (200) zu erzeugen, um ein Druckelement (201) in die Position zu bewegen, die es ermöglicht, die defekte stabförmige Gegenstände (Rd) herauszudrücken, und
die Zurückweisungseinheit (200) umfasst mindestens ein Druckelement (201), das zum Zurückweisen des defekten stabförmigen Gegenstands (Rd) ausgelegt ist. Die Zurückweisungseinheit ist so ausgelegt, dass sie sich zusammen mit dem Massenstrom in eine Position bewegt, die es ihm das Herauszudrücken von defekten stabförmigen Gegenständen (Rd) ermöglicht und sich zusammen mit dem Massenstrom im Verlauf der Zurückweisung als Reaktion auf das von der Steuerung (300) empfangene Steuersignal zu bewegen,

2. Die Vorrichtung nach Anspruch 1, bei der das Druckelement (201) angepasst ist, sich zusammen mit dem Massenstrom mit der gemessenen Geschwindigkeit der stabförmigen Gegenstände (R) im Massenstrom zu bewegen.

3. Die Vorrichtung nach Anspruch 2, bei der das Druckelement (201) so ausgelegt ist, dass es sich zusammen mit dem Massenstrom mit der gemessenen Geschwindigkeit als stabförmige Gegenstände (R) im Massenstrom bewegt, wohingegen die gemessene Geschwindigkeit der stabförmigen Gegenstände (R) im Massenstrom konstant und/oder variabel ist.

4. Die Vorrichtung nach einem der Ansprüche 1 bis 3, bei der die Zurückweisungseinheit (200) ferner mindestens ein Rückhalteelement (202) umfasst, das auf der gegenüberliegenden Seite des Massenstroms relativ zum Druckelement (201) angeordnet ist; wobei das Rückhalteelement (202) angepasst ist, um den defekten stabförmigen Gegenstand (Rd) zurückzuweisen und den stabförmigen Gegenstand (R) zurückzuhalten, der sich um den defekten stabförmigen Gegenstand (Rd) befindet, der zurückgewiesen werden soll.

5. Die Vorrichtung nach einem der Ansprüche 1 bis 4, bei der die Überwachungseinheit (100) angepasst ist, um die geometrischen Parameter der Vorderflächen der stabförmigen Gegenstände (R) optisch zu bestimmen, insbesondere Symmetrie, Regelmäßigkeit der Form der Vorderseite Oberfläche eines stabförmigen Gegenstandes (R), Kontinuität der Hülle, Umhüllungen der Hülle und Symmetrie der Einsatzelemente, die von der Vorderseite des Gegenstandes sichtbar sind.

6. Die Vorrichtung nach einem der Ansprüche 1 bis 5, bei der die Überwachungseinheit (100) mindestens zwei Kameras umfasst, die auf gegenüberliegenden Seiten des Massenstroms von stabförmigen Gegenständen (R) angeordnet sind.

7. Die Vorrichtung nach einem der Ansprüche 1 bis 6, bei der die Vorrichtung zwei Zurückweisungseinheiten (200) umfasst, die auf den gegenüberliegenden Seiten des Massenstroms angeordnet sind.

8. Die Vorrichtung nach einem der Ansprüche 1 bis 7, bei der die Zurückweisungseinheit (200) mindestens zwei Druckelemente (201) umfasst, die auf den gegenüberliegenden Seiten des Massenstroms oder auf derselben Seite des Massenstroms angeordnet sind.

9. Das Verfahren zum Zurückweisen defekter stabförmiger Gegenstände (Rd) aus einem Massenstrom von stabförmigen Gegenständen (R) auf einem Förderer umfasst die folgenden Schritte:
Bilder der gegenüberliegenden Vorderflächen des Massenstroms stabförmiger Gegenstände mittels einer Überwachungseinheit (100) in Form von optischen Rekordern (101) aufzeichnen,
in dem Massenstrom defekte stabförmige Gegenstände (Rd) identifizieren und die Position von defekten stabförmigen Gegenständen (Rd) im Massenstrom auf dem Förderer mittels einer Steuerung (300) bestimmen, wobei die Identifizierung von fehlerhaften stabförmigen Gegenständen (Rd) auf dem Bild der Vorderflächen des Massenstroms und den Kriterien bezüglich der geometrischen Parameter der gegenüberliegenden Vorderflächen stabförmiges Gegenstandes basiert.
in der Steuerung (300) die Steuersignalen für Zurückweisungseinheit (200) erzeugen, um das Druckelement (201) in eine Position zu bewegen, die es ermöglicht, den defekten stabförmigen Gegenstand (Rd) herauszudrücken,
Signale von der Steuerung (300) durch eine Zurückweisungseinheit (200) empfangen,
der defekte stabförmigen Gegenstand (Rd) durch mindestens ein Druckelement (201) zurückweisen, der ein Teil der Zurückweisungseinheit (200) ist, nachdem es zusammen mit dem Massenstrom in einer Position bewegt wurde, die es ihm ermöglicht, den defekten stabförmigen Gegenstand (Rd) herauszudrücken und zusammen mit dem Massenstrom im Verlauf der Zurückweisung als Reaktion auf das von der Steuerung (300) empfangene Steuersignal bewegen.

10. Ein System zur Bestimmung der Qualität in der Tabakindustrie, umfasst
eine erste Vorrichtung zum Zurückweisen von defekten stabförmigen Gegenständen (Rd) aus dem Massenstrom von stabförmigen Gegenständen (R) auf einem Förderer, wie in Anspruch 1,
mindestens eine mittlere Handhabungsvorrichtung für stabförmige Gegenstände und/oder eine Stabhandhabungsvorrichtung für den Transport (3) und
eine zweite Überwachungsvorrichtung (1'), die eine zweite Überwachungseinheit (100) mit zweiten optischen Rekordern (101) umfasst, die Bilder der gegenüberliegenden Vorderflächen des Massenstroms von stabförmigen Gegenständen (R) auf dem Förderer an einer Stelle stromabwärts der aufzeichnen mindestens eine Stabhandhabungsvorrichtung für stabförmige Gegenstände und/oder eine Transportvorrichtung (3) für die Handhabung von Stäben und eine zweite Steuerung (300), die dazu ausgelegt ist, fehlerhafte stabförmige Gegenstände (Rd) im Massenstrom zu identifizieren, basierend auf den aufgezeichneten Bilder unter Verwendung von Kriterien bezüglich geometrischer Parameter der gegenüberliegenden Vorderflächen von stabförmigen Gegenständen (R),

11. Das System nach Anspruch 10, bei dem
die zweite Steuerung (300) der zweiten Überwachungsvorrichtung (1') ferner angepasst ist, um die Position der defekten stabförmigen Gegenstände (Rd) im Massenstrom auf dem Förderer zu bestimmen, und das System ist ferner mit einer zweiten
Zurückweisungseinheit (200) ausgestattet, die ein zweites Druckelement (201) und das zweite Rückhalteelement (202) enthält, die dazu ausgelegt sind, einen defekten stabförmigen Gegenstand (Rd) zurückzuweisen, und ferner dazu ausgelegt sind, sich währenddessen mit dem Massenstrom zu bewegen Ablehnung.

12. Das System nach einem der Ansprüche 10 bis 11, bei der die Handhabungsvorrichtung für stabförmige Gegenstände oder Transportvorrichtung (3) für die Handhabung von Stäben sind aus einer Gruppe ausgewählt, die einen Belader, eine Schale, einen Entlader, einen Bandförderer, und einen Pufferspeicher umfasst.

## Revendications

1. Appareil de l'industrie du tabac pour le rejet d'articles défectueux en forme de tige (Rd) à partir d'un flux massique d'articles en forme de tige (R) sur un convoyeur, comprenant
une unité de surveillance (100) adaptée pour déterminer optiquement les paramètres géométriques des articles en forme de tige (R), et
au moins une unité de rejet (200) adaptée pour retirer un article en forme de tige (Rd) défectueux du flux massique des articles en forme de tige (R), l'unité étant configurée pour être placée en aval du flux massique des articles en forme de tige (R) dans la direction de déplacement du convoyeur depuis l'unité de surveillance (100),
un contrôleur (300), dans lequel
l'unité de surveillance (100) est dotée d'enregistreurs optiques (101) adapté pour enregistrer des images des surfaces frontales opposées du flux de masse des articles en forme de tige (R) sur un convoyeur, de plus
dans lequel
le contrôleur (300) est adapté pour identifier les articles défectueux en forme de tige (Rd) dans le flux de masse, et déterminer la position des articles défectueux en forme de tige (Rd) dans le flux de masse, sur la base des images enregistrées, et avec des critères concernant les paramètres géométriques des surfaces frontales opposées des articles en forme de tige (R), et adapté pour générer des signaux de commande pour une unité de rejet (200) afin de déplacer un élément de poussée (201) vers la position permettant de pousser l'article défectueux en forme de tige (Rd), et
l'unité de rejet (200) comprend au moins un élément de poussée (201) adapté pour rejeter l'article défectueux en forme de tige (Rd), l'unité de rejet est adaptée pour se déplacer avec le flux de masse dans une position lui permettant de pousser l'article défectueux en forme de tige (Rd) et de se déplacer avec le flux de masse au cours du rejet en réponse au signal de contrôle tel qu'il est reçu du contrôleur (300).

2. Appareil selon la revendication 1, dans lequel l'élément de poussée (201) est adapté pour se déplacer avec le flux massique à la vitesse mesurée des articles en forme de tige (R) dans le flux massique.

3. Appareil selon la revendication 2, dans lequel l'élément de poussée (201) est adapté pour se déplacer avec le flux de masse à la vitesse mesurée des articles en forme de tige (R) dans le flux de masse, tandis que la vitesse mesurée des articles en forme de tige (R) dans le flux de masse est constante et/ou variable.

4. Appareil selon l'une des revendications 1 à 3, dans lequel l'unité de rejet (200) comprend en outre au moins un élément de retenue (202), disposé du côté opposé du flux de masse par rapport à l'élément de poussée (201), l'élément de retenue (202) étant adapté pour rejeter l'article en forme de tige (Rd) défectueux et pour retenir les articles en forme de tige (R) situés autour de l'article en forme de tige (Rd) défectueux à rejeter.

5. Appareil selon l'une des revendications 1 à 4, dans lequel l'unité de surveillance (100) est adaptée pour déterminer optiquement les paramètres géométriques des surfaces frontales des articles en forme de tige (R), en particulier la symétrie, la régularité de la forme de la surface frontale d'un article en forme de tige (R), la continuité de l'enveloppe, l'enveloppement de l'enveloppe et la symétrie des éléments d'insertion visibles depuis la face frontale de l'article.

6. L'appareil comme dans l'une des revendications 1 à 5 dans lequel l'unité de surveillance (100) comprend au moins deux caméras situées sur les côtés opposés du flux de masse des articles en forme de tige (R).

7. L'appareil comme dans l'une des revendications 1 à 6, dans lequel l'appareil comprend deux unités de rejet (200) situées sur les côtés opposés du flux de masse.

8. Appareil selon l'une des revendications 1 à 7, dans lequel l'unité de rejet (200) comprend au moins deux éléments de poussée (201) situés sur les côtés opposés du flux de masse ou sur le même côté du flux de masse.

9. Procédé de rejet d'articles défectueux en forme de tige (Rd) à partir d'un flux massique d'articles en forme de tige (R) sur un convoyeur, comprenant les étapes suivantes :
l'enregistrement d'images des surfaces frontales opposées du flux de masse d'articles en forme de tige au moyen d'une unité de surveillance (100) sous forme d'enregistreurs optiques (101),
identification dans la masse des articles en forme de tige (Rd) défectueux et détermination de la position des articles en forme de tige (Rd) défectueux dans le flux de masse sur le convoyeur au moyen d'un contrôleur (300), dans lequel l'identification des articles en forme de tige (Rd) défectueux est basée sur l'image des surfaces frontales du flux de masse et les critères relatifs aux paramètres géométriques des surfaces frontales opposées des articles en forme de tige,
dans le contrôleur (300), en générant des signaux de commande pour l'unité de rejet (200) afin de déplacer l'élément de poussée (201) vers une position permettant de pousser l'article défectueux en forme de tige (Rd),
en recevant des signaux du contrôleur (300), par une unité de rejet (200),
le rejet de l'article défectueux en forme de tige (Rd) par au moins un élément de poussée (201) faisant partie de l'unité de rejet (200) après s'être déplacé avec le flux de masse dans une position lui permettant de pousser l'article défectueux en forme de tige (Rd) et s'être déplacé avec le flux de masse au cours du rejet en réponse au signal de commande tel que reçu du contrôleur (300).

10. Un système de détermination de la qualité dans l'industrie du tabac comprenant
un premier appareil pour le rejet d'articles défectueux en forme de tige (Rd) à partir d'une masse faible d'articles en forme de tige (R) sur un convoyeur, comme dans la revendication 1,
au moins un appareil intermédiaire de manutention d'articles en forme de tige et/ou un appareil de transport pour la manipulation de tiges (3), et
un deuxième appareil de surveillance (1') comprenant une deuxième unité de surveillance (100) ayant d'autres enregistreurs optiques (101) enregistrant des images des surfaces frontales opposées du flux de masse d'articles en forme de tige (R) sur le convoyeur à un emplacement en aval d'au moins un appareil intermédiaire de manipulation d'articles en forme de tige et/ou un appareil de transport pour la manipulation de tiges (3), et un deuxième contrôleur (300) adapté pour identifier les articles en forme de tige (Rd) défectueux dans le flux de masse, sur la base des images enregistrées, en utilisant des critères concernant les paramètres géométriques des surfaces frontales opposées des articles en forme de tige (R).

11. Le système selon la revendication 10, dans lequel
le deuxième contrôleur (300) du deuxième appareil de surveillance (1') est en outre adapté pour déterminer la position des articles défectueux en forme de tige (Rd) dans le flux de masse sur le convoyeur, et le système est en outre pourvu
d'une deuxième unité de rejet (200) comprenant un deuxième élément de poussée (201) et un deuxième élément de retenue (202) adaptée pour rejeter l'article défectueux en forme de tige (Rd), et adaptée en outre pour se déplacer avec le flux de masse au cours du rejet.

12. Le système comme dans l'une des revendications 10 à 11, dans lequel l'appareil de manutention d'articles en forme de tige ou l'appareil de transport pour la manipulation de tiges (3) sont choisis dans un groupe comprenant un chargeur, un plateau, un déchargement, un convoyeur à bande et un magasin tampon.
